# EUROPÄISCHE PATENTANMELDUNG

(11) **EP 4 542 155 A1**
(43) Veröffentlichungstag der Anmeldung: **23.04.2025**
(21) Anmeldenummer: 23204934.6
(22) Anmeldetag: 20.10.2023
(51) Int. Cl.: F27B 7/38, C04B 7/47, F27B 7/42, F27D 17/00, F27D 19/00

(54) **ZEMENTKLINKERHERSTELLUNGSANLAGE UND VERFAHREN ZUM BETREIBEN EINER ZEMENTKLINKERHERSTELLUNGSANLAGE**

(71) Anmelder: Scheuch Management Holding GmbH, 4971 Aurolzmünster (AT)
(72) Erfinder: BRÜGGEMANN, Jörg, 45894 Gelsenkirchen (DE); HERMANDINGER, Martin, 4924 Waldzell (AT); LECHNER, Georg, 4920 Schildorn (AT)
(74) Vertreter: SONN Patentanwälte GmbH & Co KG

(57) **Zusammenfassung**

Die Erfindung betrifft eine Zementklinkerherstellungsanlage (1), aufweisend:
eine Ofenanlage (2);
einen Klinkerkühler (4);
eine Filtereinheit (29) zur Entstaubung eines Rohgases;
eine Wärmetauschereinheit (30) zur Rückgewinnung von Wärmeenergie (E) aus einem aus der Filtereinheit (29) austretenden Reingas (24), wobei die Wärmetauschereinheit (30) der Filtereinheit (29) strömungstechnisch nachgeschaltet ist;
eine Reingasrückführung (32) zur zumindest teilweisen Rückführung des Reingases (24) und Vermischung des Reingases (24) mit dem Rohgas (18) zu einem Gasgemisch (25) vor der Filtereinheit (29), wobei die Reingasrückführung (32) zumindest ein Strömungsregulierungselement (27a) zum Einstellen einer Menge an rückgeführtem Reingas (24) aufweist; und
eine Steuer- und/oder Regelungseinrichtung (26), die dazu eingerichtet ist, eine Temperatur (T₂₅) des das Rohgas (18) und das rückgeführte Reingas (24) aufweisenden Gasgemisches (25), welches in die Filtereinheit (29) zur Entstaubung geleitet wird, durch Einstellen des Strömungsregulierungselements (27a) gemäß einer Temperatursollvorgabe (Tₛₒₗₗ) zu steuern und/oder zu regeln.

Des Weiteren betrifft die Erfindung ein Verfahren zum Betreiben einer Zementklinkerherstellungsanlage (1).

## Beschreibung

Die Erfindung betrifft eine Zementklinkerherstellungsanlage, aufweisend:
eine Ofenanlage zum Brennen von Zementklinker;
einen an die Ofenanlage anschließenden Klinkerkühler;
eine Filtereinheit zur Entstaubung eines Rohgases aus dem Klinkerkühler; und
eine Wärmetauschereinheit zur Rückgewinnung von Wärmeenergie aus einem aus der Filtereinheit austretenden Reingas, wobei die Wärmetauschereinheit der Filtereinheit strömungstechnisch nachgeschaltet ist.

Des Weiteren betrifft die Erfindung ein Verfahren zum Betreiben einer Zementklinkerherstellungsanlage.

Bei der Herstellung von Zementklinker werden große Mengen an Wärmeenergie eingesetzt. Um die umgesetzte Wärmeenergie möglichst vollständig zu nutzen, ist es aus dem Stand der Technik bekannt, Abwärme mittels Wärmetauscher auszukoppeln und beispielsweise einem Kraftwerk zur Erzeugung elektrischer Energie oder einem Fernwärmenetz zuzuführen. Des Weiteren ist bekannt, entstandene Abwärme unter Verwendung von Wärmetauschern an anderen Stellen innerhalb einer Zementklinkerherstellungsanlage wiederzuverwenden. In der WO 2015/179892 A1 werden beispielsweise Wärmetauscher eingesetzt, um Abwärme über ein Wärmetauschermedium innerhalb einer Zementklinkerherstellungsanlage zu verteilen und dadurch erneut zu nutzen.

Da staubbeladene Rohgase zu Verschmutzungen, Korrosion und Verschleiß führen, werden meist Filtereinheiten zur Entstaubung von Rohgasen den eingangs erwähnten Wärmetauschereinheiten zur Auskoppelung von Wärmeenergie vorgeschaltet. Bevor jedoch die heißen, direkt aus der Ofenanlage bzw. dem Klinkerkühler stammenden Rohgase in eine Filtereinheit eingeleitet und entstaubt werden können, müssen diese auf ein niedrigeres Temperaturniveau gebracht werden, um Beschädigungen der Filtereinheit zu vermeiden. Zu diesem Zweck wird den Rohgasen im Stand der Technik vor Einleitung in eine Filtereinheit kühle Umgebungsluft beigemischt.

Um die in einer Ofenanlage zur Herstellung von Zementklinker typischerweise auftretenden Betriebsschwankungen ausgleichen zu können, müssen Filtereinheiten zur Entstaubung von Rohgasen gemäß einer maximal zu erwartenden Gasmenge dimensioniert werden. Allerdings haben Messungen gezeigt, dass derart große Gasmengen im Betrieb einer Zementklinkerherstellungsanlage nur selten vorkommen, sodass die Filtereinheiten einen Großteil der Zeit im Teillastbetrieb betrieben werden. Eine Vollauslastung der Filtereinheiten ist die meiste Zeit nicht gegeben.

Im Lichte dieser Ausführungen ist es Aufgabe der vorliegenden Erfindung, die Nachteile des Standes der Technik zu lindern. Vorzugsweise ist es Aufgabe der vorliegenden Erfindung, bei einer Zementklinkerherstellungsanlage der oben beschriebenen Art die Anlagenkomponenten, insbesondere die Filtereinheit, im Betrieb umfänglicher auszunutzen und den Anteil an rückgewonnener Wärmeenergie zu erhöhen.

Gelöst wird diese Aufgabe durch eine Zementklinkerherstellungsanlage gemäß Anspruch 1 und durch ein Verfahren zum Betreiben einer Zementklinkerherstellungsanlage nach Anspruch 12.

Erfindungsgemäß sind bei einer Zementklinkerherstellungsanlage der eingangs erwähnten Art
eine Reingasrückführung zur zumindest teilweisen Rückführung des Reingases und Vermischung des Reingases mit dem Rohgas zu einem Gasgemisch vor der Filtereinheit, wobei die Reingasrückführung zumindest ein Strömungsregulierungselement, insbesondere ein Ventil und/oder ein Gebläse, zum Einstellen einer Menge an rückgeführtem Reingas aufweist; und
eine Steuer- und/oder Regelungseinrichtung, die dazu eingerichtet ist, eine Temperatur des das Rohgas und das rückgeführte Reingas aufweisenden Gasgemisches, welches in die Filtereinheit zur Entstaubung geleitet wird, durch Einstellen des zumindest einen Strömungsregulierungselements gemäß einer Temperatursollvorgabe zu steuern und/oder zu regeln vorgesehen.

Vorteilhafterweise wird durch die Reingasrückführung die anfallende Abwärme besser genutzt, weil das rückgeführte Reingas ein höheres Temperaturniveau als die im Stand der Technik zur Kühlung des Rohgases eingesetzte Umgebungsluft besitzt. Dadurch kann auch die Kapazität der Filtereinheit besser ausgenutzt werden, da durch die Rückführung des wärmeren Reingases eine größere Menge an Gasgemisch in die Filtereinheit geführt wird, als dies bei der Verwendung von kühlerer Umgebungsluft der Fall wäre. Bevorzugt wird das Reingas nach Austritt aus der Wärmetauschereinheit rückgeführt. Das aus der Wärmetauschereinheit austretende Reingas hat bevorzugt eine Temperatur von zumindest 80°C, vorzugsweise von 90°C bis 110°C. Im Vergleich dazu hat Umgebungsluft, je nach Jahreszeit, meist eine Temperatur zwischen 0°C und 35°C. Das rückgeführte Reingas ist dennoch in den meisten Betriebszuständen der Zementklinkerherstellungsanlage kühler als das aus dem Klinkerkühler austretende Rohgas, dessen Temperatur typischerweise zwischen 140°C und 780°C liegt, sodass das Rohgas durch das rückgeführte Reingas gekühlt bzw. ein Gasgemisch erzeugt werden kann, dessen Temperatur geringer ist als die Temperatur des aus dem Klinkerkühler austretenden Rohgases. Die Reingasrückführung kann zur Führung des Reingases zumindest eine Leitung, insbesondere ein Rohr oder einen Schlauch, aufweisen. Um die Filtereinheit nicht durch Überhitzung zu beschädigen, wird die Temperatur des Gasgemisches mit der Steuer- und/oder Regelungseinrichtung gemäß einer Temperatursollvorgabe gesteuert und/oder geregelt, wobei die Temperatursollvorgabe bevorzugt kleiner oder gleich einer maximalen Betriebstemperatur der Filtereinheit ist, welche je nach Ausführung der Filtereinheit von 180°C bis 250°C betragen kann. Die Steuer- und/oder Regelungseinrichtung sorgt durch Einstellen des zumindest einen Strömungsregulierungselements und damit Einstellen der Menge an rückgeführten und mit dem Rohgas vermischtem Reingas dafür, dass die Temperatur des Gasgemisches einerseits nicht zu hoch ist, um Beschädigungen der Filtereinheit zu vermeiden, und andererseits nicht zu niedrig ist, um mithilfe der Wärmetauschereinheit einen möglichst hohen Anteil an Wärmeenergie zurückzugewinnen. Wenn jedoch die Temperatur des aus dem Klinkerkühler austretenden Rohgases unterhalb der Temperatursollvorgabe liegt, wie dies in manchen Betriebszuständen des Klinkerkühlers der Fall sein kann, weist das Gasgemisch ebenfalls eine Temperatur auf, die unterhalb der Temperatursollvorgabe liegt. Die Steuer- und/oder Regelungseinrichtung kann einen Regler, der die Temperatur des Gasgemisches gemäß der Temperatursollvorgabe als Führungsgröße regelt, und/oder eine Steuerung, die die Temperatur des Gasgemisches gemäß der Temperatursollvorgabe als Führungsgröße steuert, aufweisen. Als Stellgröße für die Steuer- und/oder Regelungseinrichtung kann insbesondere die Menge an rückgeführtem Reingas bzw. der Volumenstrom des rückgeführten Reingases dienen. Als Messgröße für die Steuer- und/oder Regelungseinrichtung kann beispielsweise die Temperatur und/oder der Volumenstrom des Rohgases am Ausgang des Klinkerkühlers oder eine damit jeweils in Beziehung stehende Größe herangezogen werden. Zur Erfassung der Temperatur des Rohgases kann zum Beispiel ein Temperatursensor am Ausgang des Klinkerkühlers eingesetzt werden. Zur Erfassung des Volumenstroms des Rohgases kann zum Beispiel ein Strömungssensor am Ausgang des Klinkerkühlers eingesetzt werden. Bei einer Ausführung der Erfindung kann zusätzlich oder alternativ die Temperatur und/oder der Volumenstrom des Gasgemisches als Messgröße herangezogen werden. Bei einer Ausführung der Steuer- und/oder Regelungseinrichtung als Steuereinrichtung kann beispielsweise eine Steuerung eingesetzt werden, die das zumindest eine Strömungsregulierungselement in Abhängigkeit von der Temperatur des Rohgases, vorzugsweise in Abhängigkeit von einer Differenz zwischen der Temperatur des Rohgases und der Temperatursollvorgabe, und/oder in Abhängigkeit des Volumenstroms des Rohgases ansteuert. Wenn die Steuer- und/oder Regelungseinrichtung einen Regler aufweist, kann dieser beispielsweise als P-Regler, PI-Regler oder PID-Regler ausgebildet sein. Die Steuer- und/oder Regelungseinrichtung ist bevorzugt digital, beispielsweise in einem Mikroprozessor oder einem Computer, implementiert. Das zumindest eine Strömungsregulierungselement kann von der Steuer- und/oder Regelungseinrichtung direkt oder indirekt aktuiert werden. Auf diese Weise kann die Menge an rückgeführtem und mit dem Rohgas vermischten Reingas eingestellt werden, sodass die Temperatur des Gasgemisches der Temperatursollvorgabe entspricht. Mit anderen Worten kann der Volumenstrom des rückgeführten Reingases, der mit dem Strom des Rohgases vermischt wird, mithilfe des zumindest einen Strömungsregulierungselements eingestellt werden. Als Strömungsregulierungselement kann beispielsweise ein regulierbares, insbesondere stufenlos regulierbares, Ventil vorgesehen sein. Zusätzlich oder alternativ kann ein Gebläse als Strömungsregulierungselement vorgesehen sein. Bei der Ofenanlage handelt es sich bevorzugt um einen Drehrohrofen. Der Klinkerkühler ist an den Drehrohrofen angeschlossen und dient dazu, den gebrannten Zementklinker abzukühlen. Die Temperatur der aus dem Klinkerkühler austretenden Rohgase liegt beispielsweise zwischen 140°C und 780°C. Vorzugsweise liegt die Temperatursollvorgabe unter 260°C, insbesondere unter 235°C, um die Filtereinheit nicht zu beschädigen. Die Filtereinheit weist bevorzugt zumindest einen Schlauchfilter, insbesondere aus einem Gewebematerial, und/oder zumindest eine Filterkerze, insbesondere aus Keramik oder Metall, und/oder einen Elektrofilter auf. Die Wärmetauschereinheit weist vorzugsweise einen Rohrbündel- oder Platten-Wärmetauscher auf und ist zum Auskoppeln der in dem Reingas enthaltenen Wärmeenergie ausgebildet. Die Wärmetauschereinheit ist der Filtereinheit strömungstechnisch nachgeschaltet, sodass das Reingas, das aus der Filtereinheit austritt, in die Wärmetauschereinheit weitergeleitet wird. Bei einer besonders bevorzugten Ausführungsform der Erfindung ist vorgesehen, dass die Wärmetauschereinheit direkt, d.h. ohne zwischengeschaltete weitere Anlageneinheiten, an die Filtereinheit angeschlossen ist. Rohre, Schläuche oder Ventile zählen nicht zu den Anlageneinheiten.

Bei einer bevorzugten Ausführungsform der Erfindung ist vorgesehen, dass die Steuer- und/oder Regelungseinrichtung eine Messeinheit aufweist, welche dazu eingerichtet ist, einen Volumenstrom des Rohgases aus dem Klinkerkühler und/oder eine Temperatur des Rohgases aus dem Klinkerkühler zu bestimmen. Auf Basis des gemessenen Volumenstroms und/oder der Temperatur des Rohgases kann die benötigte Menge bzw. der Volumenstrom an rückgeführtem Reingas ermittelt werden, um die Temperatursollvorgabe zu erfüllen. Die Steuer- und/oder Regelungseinrichtung kann das zumindest eine Strömungsregulierungselement in der Folge einstellen, um die ermittelte Menge an rückgeführtem Reingas in den Strom des Rohgases zu leiten. Die benötigte Menge an rückgeführtem Reingas kann beispielsweise auf Basis eines mathematischen Modells ermittelt werden, welches die Temperatur des Rohgases und/oder den Volumenstrom des Rohgases berücksichtigt. Des Weiteren kann das mathematische Modell die Temperatur des Reingases berücksichtigen. Der Volumenstrom des Rohgases und des Reingases kann beispielsweise mit einer Staudrucksonde einem Differenzdrucksensor erfasst werden. Alternativ kann der Volumenstrom des Rohgases aus einer Drehzahl eines Ventilators des Klinkerkühlers abgeleitet werden. Die Temperatur des Rohgases kann, wie bereits erwähnt, beispielsweise mithilfe eines Temperatursensors am Ausgang des Klinkerkühlers gemessen werden.

Um im Falle einer zu großen Menge an Rohgasen oder zu hohen Temperaturen Beschädigungen der Filtereinheit zu vermeiden, kann bei einer Ausführungsform der Erfindung als erste Sicherheitsmaßnahme strömungstechnisch vor der Filtereinheit eine Frischluftzufuhr zum Zuführen von Luft, insbesondere Umgebungsluft, vorgesehen sein. Für den Fall, dass das rückgeführte Reingas nicht ausreicht, um das Gasgemisch unter eine Grenztemperatur, welche beispielsweise 250°C betragen oder der Temperatursollvorgabe entsprechen kann, abzukühlen, kann dem Gasgemisch somit Luft, insbesondere Umgebungsluft, beigemischt werden. Sobald jedoch wieder nur mit dem rückgeführten Reingas die Temperatursollvorgabe oder die Grenztemperatur erreicht werden kann, kann die Frischluftzufuhr wieder deaktiviert werden. Die Frischluftzufuhr kann die Luft dem rückgeführten Reingas, dem Rohgas oder dem Gasgemisch zuführen. Die Frischluftzufuhr kann zu diesem Zweck ein insbesondere stufenlos einstellbares Ventil für die Luft aufweisen, welches von der Steuer- und/oder Regelungseinrichtung aktuiert werden kann.

Um das Rohgas zu kühlen und die Filtereinheit nicht zu beschädigen, ist es vorteilhaft, wenn strömungstechnisch vor der Filtereinheit eine Mischkammer vorgesehen ist, welche dazu ausgebildet ist, das Rohgas aus dem Klinkerkühler und das rückgeführte Reingas zu dem Gasgemisch vermischen. Durch die Vermischung werden lokale Temperaturspitzen des Gasgemisches vermieden. Die Mischkammer kann beispielsweise als Zyklon oder als einfache Kammer ausgebildet sein. Die Mischkammer kann eine Austragöffnung für anfallenden Staub aufweisen. Die Mischkammer kann dem zumindest einen Strömungsregulierungselement strömungstechnisch nachgeschaltet sein. Alternativ kann das zumindest eine Strömungsregulierungselement in die Mischkammer integriert sein.

Als zweite Sicherheitsmaßnahme kann strömungstechnisch vor der Filtereinheit eine weitere Wärmetauschereinheit, insbesondere eine luftgekühlte Wärmetauschereinheit, vorgesehen sein. Die weitere Wärmetauschereinheit kann beispielsweise aktiviert werden, wenn auch die Frischluftzufuhr nicht ausreicht, um die aus dem Klinkerkühler austretenden Rohgase bzw. das Gasgemisch unterhalb der Grenztemperatur zu kühlen. Bevorzugt ist die weitere Wärmetauschereinheit der Frischluftzufuhr strömungstechnisch nachgeschaltet.

Besonders bevorzugt ist, wenn die weitere Wärmetauschereinheit parallel zu einer Bypassverbindungsleitung zwischen der Mischkammer und der Filtereinheit angeordnet ist. Wenn das Rohgas bzw. das Gasgemisch durch das rückgeführte Reingas und gegebenenfalls durch die Frischluftzufuhr auf eine Temperatur unterhalb der Grenztemperatur gekühlt werden kann, ist die weitere Wärmetauschereinheit deaktiviert und das Gasgemisch wird über die Bypassverbindungsleitung in die Filtereinheit geführt. Falls das Rohgas bzw. das Gasgemisch mit dem rückgeführten Reingas und gegebenenfalls der Frischluftzufuhr allerdings nicht auf eine Temperatur unterhalb der Grenztemperatur gekühlt werden kann, wird das Gasgemisch durch die weitere Wärmetauschereinheit geleitet, während die Bypassverbindungsleitung deaktiviert ist. Die weitere Wärmetauschereinheit kühlt in diesem Fall das Gasgemisch ab, um Beschädigungen an der Filtereinheit zu vermeiden. Die weitere Wärmetauschereinheit kann auch als Notkühler bezeichnet werden.

Bevorzugt ist daher eine Umschaltvorrichtung vorgesehen, welche dazu eingerichtet ist, das Gasgemisch in einer ersten Stellung über die Bypassverbindungsleitung und in einer zweiten Stellung über die weitere Wärmetauschereinheit zu leiten. Die Umschaltvorrichtung kann beispielsweise als Mehrwegeventil ausgebildet sein. Die Umschaltvorrichtung kann aber auch durch mehrere Ventile gebildet sein, welche in der Bypassverbindungsleitung und einer Zu- oder Ableitung für die weitere Wärmetauschereinheit integriert sein können.

Um die im Gasgemisch enthaltenen Rohgase zu entstauben, kann die Filtereinheit zumindest einen Schlauchfilter aufweisen. Der Schlauchfilter ist dazu ausgebildet, dauerhaft einer maximalen Betriebstemperatur von zumindest 180°C standzuhalten.

Bei einer Ausführungsform der Erfindung ist die Temperatursollvorgabe ein Temperatursollwert, welcher vorzugsweise geringer als 260°C ist, insbesondere im Bereich zwischen 180°C und 250°C liegt. Ganz besonders bevorzugt ist, wenn der Temperatursollwert im Bereich zwischen 190°C und 240°C, insbesondere im Bereich zwischen 200°C und 235°C liegt. Bei einer beispielhaften Ausgestaltung liegt der Temperatursollwert im Wesentlichen bei 230°C.

Um die Abwärme zu nutzen, kann die Wärmetauschereinheit an ein Fernwärmenetz gekoppelt sein. Alternativ kann die Wärmetauschereinheit auch an ein Kraftwerk, insbesondere ein Kraftwerk zur Erzeugung elektrischer Energie, gekoppelt sein.

Damit die Reingase rückgeführt werden können, ist es günstig, wenn die Reingasrückführung ein Gebläse aufweist.

Der Klinkerkühler zum Kühlen und Fördern des Zementklinkers in einem Klinkerbett hat vorzugsweise zumindest eine erste und eine zweite Kühlstufe. Jede der beiden Stufen kann jeweils einen Kühlrost als Auflage für das Klinkerbett aufweisen. Durch wenigstens eine Öffnung in jedem der Kühlroste kann ein Kühlmedium in das Klinkerbett eingeblasen werden. Alternativ können auch sogenannte Satellitenkühler, Planetenkühler oder Rohrkühler eingesetzt werden.

Die Erfindung bezieht sich weiters auf ein Zementwerk mit der Zementklinkerherstellungsanlage in einer der oben beschriebenen Ausführungsvarianten. Das Zementwerk kann weiters eine Anlage zur Herstellung von Rohmehl aufweisen.

Die Zementklinkerherstellungsanlage kann eine Vorwärmstufe, insbesondere einen Zyklonvorwärmer, zum Vorwärmen von Rohmaterial, insbesondere Rohmehl, vor dem Eintritt des Rohmaterials in die Ofenanlage, insbesondere in den Drehrohrofen, aufweisen.

Die eingangs gestellte Aufgabe wird auch durch ein Verfahren zum Betreiben einer Zementklinkerherstellungsanlage gemäß Anspruch 12 gelöst. Das Verfahren weist die folgenden Schritte auf:
Erzeugen von Zementklinker in einer Ofenanlage, insbesondere einem Drehrohrofen;
Kühlen des Zementklinkers in einem an die Ofenanlage anschließenden Klinkerkühler, wobei Rohgas aus dem Klinkerkühler austritt;
Steuern und/oder Regeln einer Temperatur eines aus dem Rohgas und einem rückgeführten Reingas bestehenden Gasgemisches gemäß einer Temperatursollvorgabe mittels zumindest eines Strömungsregulierungselements, insbesondere eines Ventils und/oder eines Gebläses, zum Einstellen einer Menge an rückgeführtem Reingas;
Entstauben des Gasgemisches in einer Filtereinheit, sodass ein Reingas erhalten wird;
Rückgewinnen von Wärmeenergie aus dem Reingas in einer Wärmetauschereinheit, welche der Filtereinheit strömungstechnisch nachgeschaltet ist; und
Zumindest teilweises Rückführen des Reingases und Vermischen des Reingases mit dem Rohgas vor der Filtereinheit zu dem Gasgemisch.

In dem Klinkerkühler wird der Zementklinker durch Zufuhr von Frischluft gekühlt. Durch die Kühlung wird die Frischluft staubbeladen und tritt als Rohgas aus dem Klinkerkühler aus. Das aus dem Klinkerkühler austretende Rohgas kann beispielsweise eine Temperatur von 160°C bis 800°C aufweisen. Durch Rückführen von Reingas (siehe sogleich) und Vermischen mit dem Rohgas wird in den meisten Betriebszuständen der Zementklinkerherstellungsanlage ein Gasgemisch erzeugt, dessen Temperatur niedriger ist als jenes des Rohgases. Bevorzugt weist das rückgeführte Reingas eine Temperatur von zumindest 90°C auf. Durch Einstellen der Menge an rückgeführtem Reingas wird die Temperatur des Gasgemisches geregelt, sodass dieses einer Temperatursollvorgabe entspricht. Das Gasgemisch wird anschließend in der Filtereinheit entstaubt und danach als Reingas der Wärmetauschereinheit zugeführt, in welcher die in dem Reingas enthaltene Wärmeenergie zurückgewonnen wird. Die zurückgewonnene Wärmeenergie kann beispielsweise einem Kraftwerk oder einem Fernwärmenetz zugeführt werden. Das aus der Wärmetauschereinheit wieder austretende Reingas wird, wie oben beschrieben, rückgeführt und mit dem aus dem Klinkerkühler austretenden Rohgas zu dessen Kühlung vermischt. Die oben in Zusammenhang mit der Zementklinkerherstellungsanlage beschriebenen Merkmale, Effekte und Vorteile sind auch auf das erfindungsgemäße Verfahren zum Betreiben einer Zementklinkerherstellungsanlage übertragbar. Das erfindungsgemäße Verfahren ist nicht auf die angegebene Reihenfolge der Schritte beschränkt. Die Schritte können auch in einer anderen Reihenfolge oder zumindest teilweise überlappend ausgeführt werden.

Nachfolgend wird die Erfindung anhand von Figuren beschrieben, auf die sie jedoch nicht beschränkt sein soll. Es zeigen:
Fig. 1 ein Blockschaltbild einer Zementklinkerherstellungsanlage;
Fig. 2 eine schematische Darstellung eines Teils einer Zementklinkerherstellungsanlage;
Fig. 3 ein Fließschema des in Fig. 2 schematisch dargestellten Teils einer Zementklinkerherstellungsanlage.
Fig. 4 zeitliche Temperatur- und Volumenstromverläufe;
Fig. 5 zeitliche Leistungsverläufe.

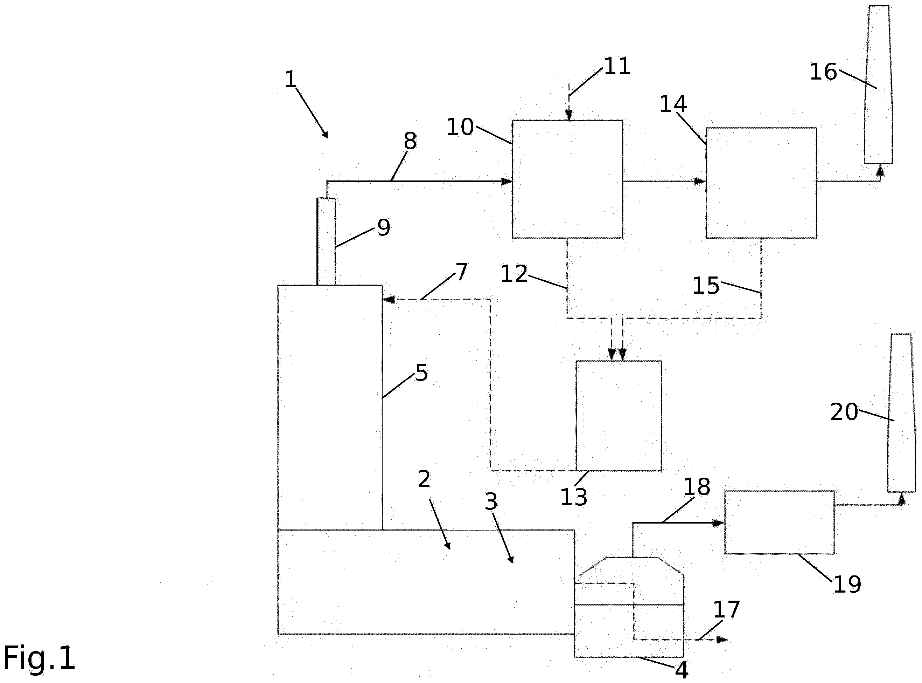

In Fig. 1 ist ein vereinfachtes Fließschema einer beispielhaften Zementklinkerherstellungsanlage 1 zur Herstellung von Zementklinker 17 gezeigt. Die Zementklinkerherstellungsanlage 1 weist eine Ofenanlage 2, insbesondere einen Drehrohrofen 3, auf, in welchem die eingebrachten Rohstoffe zur Herstellung des Zementklinkers 17 gebrannt werden. Die Ofenanlage 2 ist zwischen einem Klinkerkühler 4 und einer Vorwärmstufe 5 angeordnet. Die Vorwärmstufe 5 kann beispielsweise mehrere Zyklone (nicht gezeigt) aufweisen, mit welchen die Rohstoffe vorgewärmt werden können. Die Rohstoffe können über eine Materialaufgabe 7 in die Vorwärmstufe 5 aufgegeben werden. Nach dem Gegenstromprinzip gelangt die Rohstoffe in die Ofenanlage 2, wohingegen die bei der Verbrennung entstehenden Abgase bzw. Rauchgase 8 gegen den Strom der Rohstoffe durch die Vorwärmstufe 5 strömen. Die Rohstoffe werden in der Vorwärmstufe 5 auf bis zu 800°C aufgeheizt und in Richtung der Ofenanlage 2 transportiert. Das Abgas 8 wird gleichzeitig von ca. 850°C auf 300 bis 400°C abgekühlt. Bevor die Rohstoffe in die Ofenanlage 2 gelangen, ist in modernen Anlagen ein sogenannter Calzinator (nicht eingezeichnet) eingebaut, der über eine separate Feuerung verfügt und die Aufgabe hat, den Kalkstein durch hohe Temperaturen und ausreichend Verweilzeit zu entsäuern.

In der Ofenanlage 2 werden die Rohstoffe weiter aufgeheizt und schließlich bei Materialtemperaturen von bis zu 1600°C zu Zementklinker 17 gesintert, wobei sich dabei typische Klinkerphasen (Calcium-Aluminium-Silikate) bilden. Nach der Vorwärmstufe 5 gelangen die Abgase 8 über eine Steigleitung 9 in eine Rohmühle 10, in welcher frisches Zementklinker-Rohmaterial 11 vor dem Einsatz im Prozess vermahlen und getrocknet wird. Die Abgase 8, welche mit einer Temperatur von 280°C bis 450°C aus der Vorwärmstufe 5 austreten, werden zur Trocknung des Zementklinker-Rohmaterials 11 und Brennstoffe in der Rohmühle 10 eingesetzt. Entstehendes Rohmehl 12 wird einem Homogenisierungssilo 13 zugeführt, welches mit der Materialaufgabe 7 für die Vorwärmstufe 5 verbunden ist. Von der Materialaufgabe 7 werden die Rohstoffe, unter anderem aufweisend das Rohmehl 12, in die Vorwärmstufe 5 gefördert. Die Abgase 8 werden nach dem Durchströmen der Rohmühle 10 in eine Filterstufe 14 geleitet und entstaubt. Die Filterstufe 14 kann durch Schlauchfilter oder Elektrofilter gebildet sein. Abgeschiedener Filterstaub 15 wird in das Homogenisierungssilo 13 geleitet. Nach der Filterstufe 14 gelangen die entstickten und entstaubten Abgase 8 über einen Kamin 16 in die Atmosphäre.

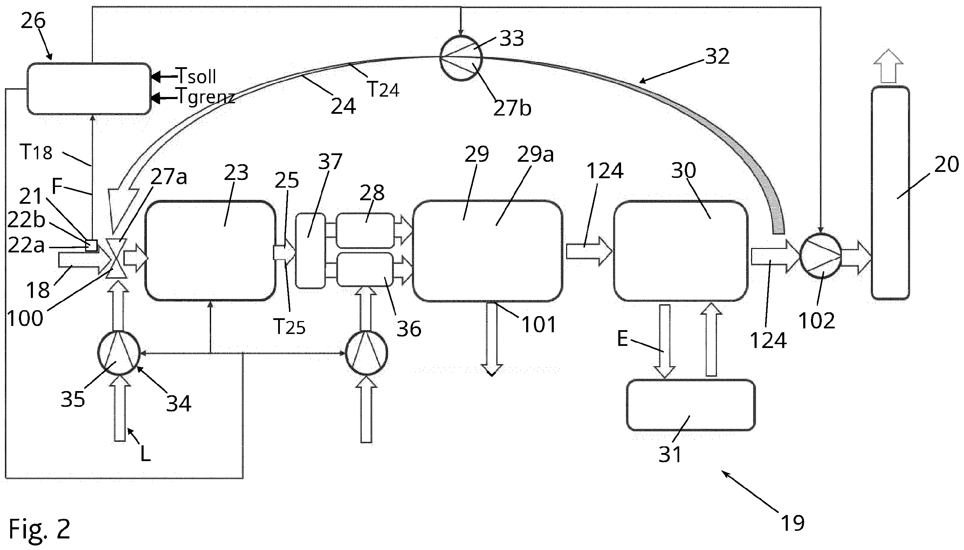

Wie aus Fig. 1 weiters ersichtlich, wird aus der Ofenanlage 2 Zementklinker 17 abgeführt, welcher in dem Klinkerkühler 4 mit Frischluft auf beispielsweise 80°C bis 200°C gekühlt wird. Ein Großteil der Frischluft wird im Prozess als Sekundär- und Tertiärluft für die Verbrennung verwendet und ein Teil verlässt den Klinkerkühler 4 als Abluft mit Temperaturen zwischen 140°C und 780°C, wobei die Abluft nachfolgend auch als Rohgas 18 bezeichnet wird. Das Rohgas 18 wird in einen anhand von Fig. 2 noch näher zu beschreibenden Anlagenteil 19 geleitet, bevor es über einen Abluftkamin 20 in die Atmosphäre abgegeben wird.

Die Erfindung ist nicht auf den in Fig. 1 gezeigten Aufbau der Zementklinkerherstellungsanlage 1 beschränkt. Eine Zementklinkerherstellungsanlage 1 gemäß der Erfindung kann auch weitere, in Fig. 1 nicht gezeigte oder andere Anlagenkomponenten aufweisen und/oder einzelne in Fig. 1 beschriebene Anlagenkomponenten nicht umfassen.

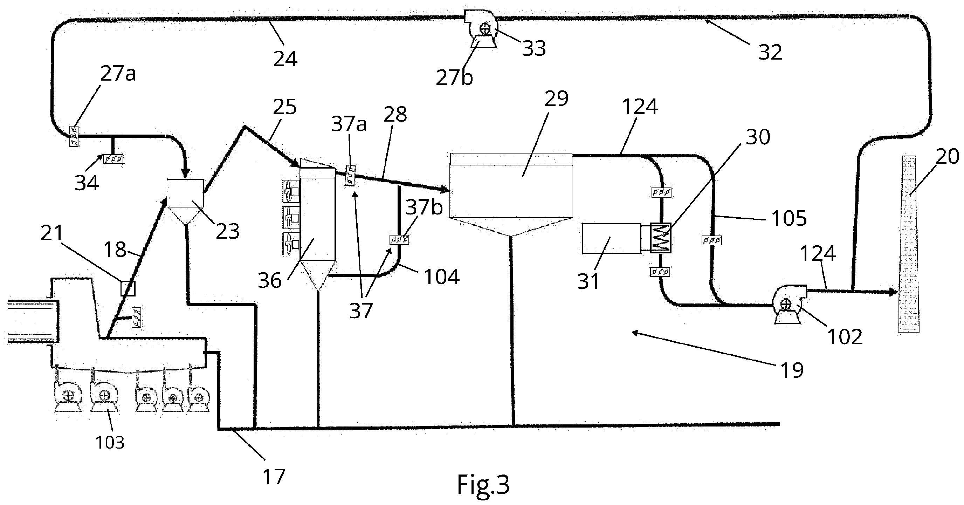

Fig. 2 zeigt schematisch den Anlagenteil 19 gemäß einer Ausführungsform der Erfindung. Das Rohgas 18 gelangt über entsprechende Zuleitungen von dem Klinkerkühler 4 in den Anlagenteil 19. Die Temperatur T₁₈ und der Volumenstrom F des Rohgases 18 werden mittels einer Messeinheit 21 am Ausgang des Klinkerkühlers 4 oder zu Beginn des Anlagenteils 19 gemessen. Die Messeinheit 21 besitzt zu diesem Zweck vorzugsweise einen Temperatursensors 22a und einen Volumenstromsensor 22b. Alternativ kann der Volumenstrom F des Rohgases 18 auch von einer Drehzahl eines oder mehrerer Ventilatoren 103 (siehe Fig. 3) des Klinkerkühlers 4 abgeleitet werden. Das Rohgas 18 wird innerhalb einer Mischkammer 23 mit davor rückgeführtem und über ein erstes Strömungsregulierungselements 27a eingeleitetem Reingas 24 vermischt und dadurch ein Gasgemisch 25 erhalten, dessen Temperatur T₂₅ in den meisten Betriebszuständen des Klinkerkühlers 4 niedriger ist als die Temperatur T₁₈ des Rohgases 18. Die Temperatur T₂₄ des rückgeführten Reingases 24 beträgt vorzugsweise zwischen 80°C und 110 °C. Die Mischkammer 23 begünstigt die Vermischung des rückgeführten Reingases 24 und des Rohgases 18. Mit Hilfe einer Steuer- und/oder Regelungseinrichtung 26 wird die Temperatur T₂₅ des Gasgemisches 25 durch Einstellen des ersten, beispielsweise als Ventil 100 ausgebildeten Strömungsregulierungselements 27a und eines zweiten, beispielsweise als Gebläse ausgebildeten Strömungsregulierungselements 27b gemäß einer Temperatursollvorgabe Tₛₒₗₗ gesteuert bzw. geregelt, um eine strömungstechnisch nachgeschaltete Filtereinheit 29 vor zu hohen Temperaturen zu schützen. In der gezeigten Darstellung ist die Steuer- und/oder Regelungseinrichtung 26 als Steuereinrichtung ausgebildet, die die Temperatur T₂₅ des Gasgemisches 25 unter anderem in Abhängigkeit der gemessenen Temperatur T₁₈ des Rohgases 18 und des Volumenstroms F des Rohgases durch Einstellen des ersten 27b und des zweiten Strömungsregulierungselements 27b steuert. Hierzu kann in der Steuereinrichtung ein mathematisches Modell hinterlegt sein, welches die Temperatur T₁₈ des Rohgases 18 und den Volumenstrom F des Rohgases 18 berücksichtigt. Vorzugsweise wird in dem mathematischen Modell auch die Temperatur T₂₄ des rückgeführten Reingases 24 berücksichtigt. Das erste Strömungsregulierungselement 27a ist der Mischkammer 23 strömungstechnisch vorgeschaltet oder alternativ in diese integriert. Das erste Strömungsregulierungselement 27a kann beispielsweise eine Gasweiche, eine Klappe oder ein Ventil mit einem insbesondere stufenlos einstellbaren Einlass sein, über welchen das rückgeführte Reingas 24 in den Strom des Rohgases 18 eingeleitet werden kann. Bevorzugt liegt die Temperatursollvorgabe Tₛₒₗₗ für das Gasgemisch 25, die von der Steuer- und/oder Regelungseinrichtung 26 eingehalten werden soll, zwischen 180°C und 250°C, beispielsweise im Wesentlichen bei 230°C. Nach Austritt aus der Mischkammer 23 wird das Gasgemisch 25 über eine Bypassverbindungsleitung 28 in die Filtereinheit 29 geleitet, in welcher das Gasgemisch 25 entstaubt wird. Der herausgefilterte Staub wird über einen Auslass 101 der Filtereinheit 29 ausgetragen. Die Filtereinheit 29 weist zumindest einen Filter, vorzugsweise einen Schlauchfilter 29a, auf. Durch Steuern bzw. Regeln der Temperatur T₂₅ des Gasgemisches 25 gemäß der Temperatursollvorgabe Tₛₒₗₗ kann die Filtereinheit 29 vor Beschädigungen geschützt werden. Nach Austritt aus der Filtereinheit 29 wird das entstaubte Gasgemisch 25, das von nun an auch als Reingas 124 bezeichnet werden kann, in eine Wärmetauschereinheit 30 geleitet, die der Filtereinheit 29 strömungstechnisch nachgeschaltet ist und in welcher die im Reingas 124 enthaltene Wärmeenergie E rückgewonnen und beispielsweise einem Fernwärmenetz 31 zugeführt wird. Das aus der Wärmetauschereinheit 30 anschließend wieder austretende Reingas 124 wird über eine Reingasrückführung 32, welche das zweite Strömungsregulierungselement 27b enthält, zumindest teilweise zu dem ersten Strömungsregulierungselement 27a rückgeführt, wo es, in Abhängigkeit der Einstellung des ersten Strömungsregulierungselements 27a, dem Rohgas 18 wie oben beschrieben zu dessen Kühlung zugleitet wird. Das rückgeführte Reingas wird zum Zwecke der Übersicht mit der Bezugsziffer 24 versehen. Es handelt sich jedoch bei den Reingasen 24, 124 um die gleichen Gase, da das rückgeführte Reingas 24 von dem Reingas 124 entnommen wird. Die Reingasrückführung 32 kann beispielsweise zumindest ein Rohr und/oder einen Schlauch aufweisen, in welchem das Reingas 24 zurückgeführt wird. Die Steuer- und/oder Regelungseinrichtung 26 kann das Gebläse 33 einstellen, um in Kombination mit dem ersten Strömungsregulierungselement 27a die benötigte Menge an Reingas 24 zu dem Ventil 100 zurückzuführen. Durch Einstellen des Ventils 100 und des Gebläses 33 kann der Volumenstrom an rückgeführtem Reingas 24 reguliert werden. Ein weiteres Gebläse 102 zwischen der Wärmetauschereinheit 30 und dem Abluftkamin 20 kann ebenfalls von der Steuer- und/oder Regelungseinrichtung 26 eingestellt werden.

Vorteilhafterweise wird durch die Rückführung des Reingases 24 die Ausbeute an zurückgewonnener Wärmeenergie E in der Wärmetauschereinheit 30 im Vergleich zum Stand der Technik, bei dem lediglich Umgebungsluft zur Kühlung des Rohgases 18 eingesetzt wird, erhöht und dadurch gleichzeitig die Kapazität der Filtereinheit 29 gleichmäßiger ausgenutzt, welche gemäß einer maximal zu erwartenden, aber nur selten auftretenden Gasmenge ausgelegt wird.

Die Steuer- und/oder Regelungseinrichtung 26 steuert bzw. regelt, wie bereits beschrieben, die Temperatur T₂₅ des Gasgemisches 25 gemäß der Temperatursollvorgabe Tₛₒₗₗ, sodass das in die Filtereinheit 29 eintretende Gasgemisch 25 nicht zu heiß ist und die Filtereinheit 29 nicht beschädigt wird. Im Betrieb einer Ofenlange 2 bzw. eines Klinkerkühlers 4 können jedoch starke Betriebsschwankungen auftreten, sodass es vorkommen kann, dass das Gasgemisch 25 trotz Reingasrückführung 32 eine Grenztemperatur T_{grenz} überschreitet. Die Grenztemperatur T_{grenz} kann dabei der Temperatursollvorgabe entsprechen kann oder beispielsweise bei 250 °C liegen. Um auch in diesem Fall Beschädigungen an der Filtereinheit 29 zu vermeiden, sind Sicherheitsmaßnahmen vorgesehen.

Eine erste Sicherheitsmaßnahme sieht eine Frischluftzufuhr 34 zum Zuführen von Luft L, insbesondere Umgebungsluft, in den Strom des Rohgases 18 bzw. des Gasgemisches 25 vor. Die Frischluftzufuhr 34 ist strömungstechnisch vor der Filtereinheit 29 angeordnet. In der gezeigten Ausführungsform ist die Frischluftzufuhr 34 mit einem weiteren, insbesondere stufenlos einstellbaren Einlass des ersten Strömungsregulierungselement 27a verbunden. Über den Einlass kann somit Umgebungsluft mit niedriger Temperatur, beispielsweise zwischen 5 °C und 30 °C, mit dem Rohgas 18 vermischt werden, um die Temperatur des Rohgases 18 bzw. des Gasgemisches 25 zu senken. Die Steuer- und/oder Regelungseinrichtung 26 kann die Frischluftzufuhr 34, welche ebenfalls ein Gebläse 35 aufweisen kann, aktivieren, wenn das rückgeführte Reingas 24 nicht ausreicht, um das Gasgemisch 25 unter die Grenztemperatur T_{grenz} abzukühlen. In diesem Fall kann dem Gasgemisch 25 somit Luft L zur zusätzlichen Kühlung beigemischt werden, um Schäden an der Filtereinheit 29 zu vermeiden. Sobald jedoch mit dem rückgeführten Reingas 24 die Temperatursollvorgabe Tₛₒₗₗ wieder erreicht oder die Grenztemperatur unterschritten werden kann, kann die Frischluftzufuhr 34 wieder deaktiviert und der weitere Einlass des ersten Strömungsregulierungselement 27a wieder geschlossen werden. Der weitere Einlass des ersten Strömungsregulierungselement 27a für die Frischluftzufuhr 34 kann von der Steuer- und/oder Regelungseinrichtung 26 aktuiert werden.

Eine zweite Sicherheitsmaßnahme sieht eine weitere Wärmetauschereinheit 36 vor, welche ebenfalls der Filtereinheit 29 strömungstechnisch vorgeschaltet ist. Die weitere Wärmetauschereinheit 36 ist in der gezeigten Ausführungsform parallel zu der Bypassverbindungsleitung 28 angeordnet und weist vorzugsweise einen luftgekühlten Wärmetauscher auf. Ein Gebläse kann den luftgekühlten Wärmetauscher mit Luft versorgen. Wenn das Gasgemisch 25 durch die Reingasrückführung 32 und die Frischluftzufuhr 34 nicht auf eine Temperatur T₂₅ unterhalb der Grenztemperatur T_{grenz} gekühlt werden kann, wird das Gasgemisch 25 durch die weitere Wärmetauschereinheit 36 geleitet, während die Bypassverbindungsleitung 28 gesperrt ist. Durch die weitere Wärmetauschereinheit 36 kann das Gasgemisch 25 zusätzlich gekühlt werden, um Beschädigungen an der Filtereinheit 29 zu vermeiden. Allerdings wird, insbesondere im Normalbetrieb, durch den Einsatz der weiteren Wärmetauschereinheit 36 der Wirkungsgrad für die Wärmerückgewinnung in der Wärmetauschereinheit 30 herabgesetzt. Wenn daher das Gasgemisch 25 durch die Reingasrückführung 32 wieder auf eine Temperatur T₂₅ unterhalb der Grenztemperatur T_{grenz} gekühlt werden kann, wird das Gasgemisch 25 wieder ausschließlich über die Bypassverbindungsleitung 28 in die Filtereinheit 29 geleitet. Die Umschaltung zwischen der Bypassverbindungsleitung 28 und der weiteren Wärmetauschereinheit 36 kann über eine Umschaltvorrichtung 37 erfolgen.

Fig. 3 zeigt ein Fließschema des Anlagenteils 19, wobei aus Gründen der Übersicht die Steuer- und/oder Regelungseinrichtung 26 weggelassen wurde. Der Aufbau entspricht im Wesentlichen jenem der schematischen Darstellung gemäß Fig. 2. Ein Unterschied zu der Ausgestaltung gemäß Fig. 2 liegt jedoch darin, dass das erste Strömungsregulierungselement 27a ausschließlich von dem rückgeführten Reingas 24 durchströmt wird und die Frischluftzufuhr 34 dazu eingerichtet ist, Luft in die Reingasrückführung 32 bzw. in das rückgeführte Reingas 24 einzubringen, bevor dieses mit dem Rohgas 18 vermengt wird. Ein weiterer Unterschied zu der Ausgestaltung gemäß Fig. 2 liegt darin, dass die Umschaltvorrichtung 37 durch zwei separate Ventile 37a, 37b gebildet ist, wovon eines - Ventil 37a - in der Bypassverbindungsleitung 28 angeordnet ist und eines - Ventil 37b - in eine Verbindungsleitung 104, welche den Ausgang der Wärmetauschereinheit 36 mit der Bypassverbindungsleitung 28 verbindet, integriert ist. In Fig. 3 ist zudem aus Sicherheitsgründen eine weitere Bypassverbindungsleitung 105 parallel zu der Wärmetauschereinheit 30 vorgesehen.

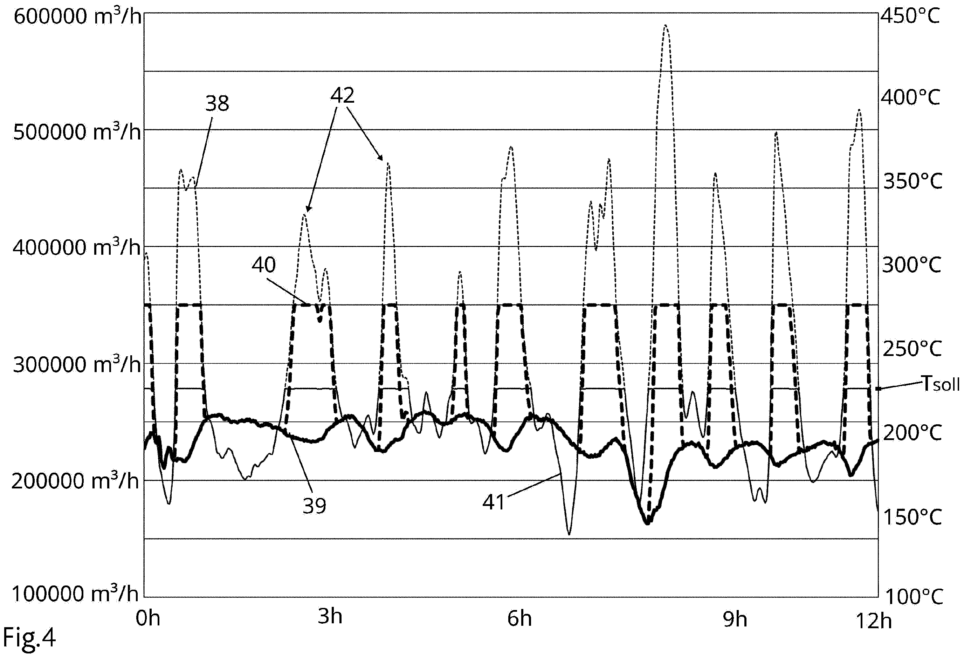

Fig. 4 zeigt zeitliche Temperatur- und Volumenstromverläufe in einem gemeinsamen Diagramm. Die Abszisse des Diagramms beschreibt dabei die Zeit in Stunden, wobei ein Zeitraum von zwölf Stunden abgebildet ist. Die linke Ordinate des Diagramms beschreibt Volumenströme in m³/h. Die rechte Ordinate des Diagramms beschreibt Temperaturen in °C.

Der Temperaturverlauf 38 zeigt den zeitlichen Verlauf der Temperatur T₁₈ des Rohgases 18. Der Volumenstromverlauf 39 zeigt den zeitlichen Verlauf des Volumenstroms F des Rohgases 18 aus dem Klinkerkühler 4. Der Volumenstromverlauf 40 zeigt den zeitlichen Verlauf des Volumenstroms an rückgeführtem Reingas 24. Der Temperaturverlauf 41 zeigt den zeitlichen Verlauf der Temperatur T₂₅ des Gasgemisches 25.

Während dem im Diagramm gemäß Fig. 4 dargestellten Zeitraum von zwölf Stunden treten Temperaturspitzen 42 der Temperatur T₁₈ des Rohgases 18 auf. Die Temperatur T₁₈ des Rohgases 18 liegt in den Temperaturspitzen 42 deutlich oberhalb der Temperatursollvorgabe Tₛₒₗₗ, welche in dem dargestellten Beispiel 230°C beträgt. Die Steuer- und/oder Regelungseinrichtung 26 sorgt daher bei einem Überschreiten der Temperatursollvorgabe Tₛₒₗₗ dafür, dass die Menge an rückgeführtem Reingas 24 erhöht wird, damit die Temperatur T₂₅ des Gasgemisches 25 der Temperatursollvorgabe Tₛₒₗₗ entspricht. Ersichtlich ist daher in dem Diagramm von Fig. 4, dass während der Temperaturspitzen 42 auch der Volumenstrom 40 des rückgeführten Reingases 24 erhöht ist. Erkennbar ist in dem Diagramm gemäß Fig. 4 zudem, dass in Zeitabschnitten, in denen die Temperatur T₁₈ des Rohgases 18 geringer ist als die Temperatursollvorgabe Tₛₒₗₗ, auch die Temperatur T₂₅ des Gasgemisches 25 geringer ist als die Temperatursollvorgabe Tₛₒₗₗ.

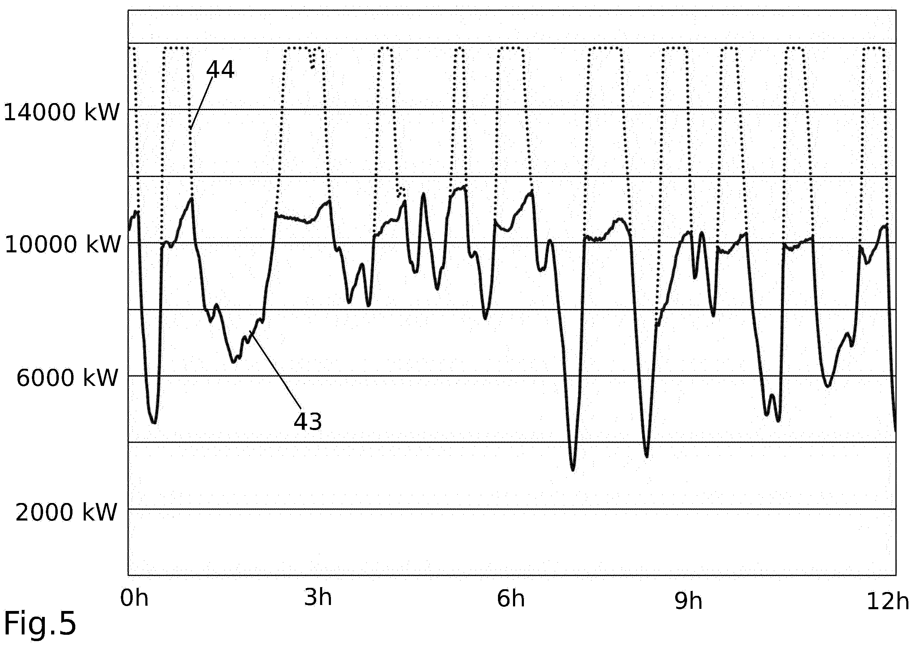

Fig. 5 zeigt ein Diagramm mit zwei Leistungsverläufen. Die Abszisse des Diagramms beschreibt die Zeit in Stunden, wobei ein Zeitraum von zwölf Stunden abgebildet ist. Die Ordinate bildet die in der Wärmetauschereinheit 30 umgesetzte Wärmeleistung in kW ab. Ein erster Leistungsverlauf 43 stellt die in der Wärmetauschereinheit 30 umgesetzte Wärmeleistung bei einem Anlagenteil 19 aus dem Stand der Technik dar, der keine Reingasrückführung 32 aufweist. Ein zweiter Leistungsverlauf 44 stellt die in der Wärmetauschereinheit 30 umgesetzte Wärmeleistung bei einem erfindungsgemäßen Anlagenteil 19 dar, der eine Reingasrückführung 32 wie oben beschrieben aufweist. Erkennbar ist, dass durch die Reingasrückführung 32 die umgesetzte Wärmeleistung deutlich und damit die Ausbeute an rückgewonnener Energie erhöht werden kann.

## Patentansprüche

1. Zementklinkerherstellungsanlage (1), aufweisend:
eine Ofenanlage (2) zum Brennen von Zementklinker (17);
einen an die Ofenanlage (2) anschließenden Klinkerkühler (4) ;
eine Filtereinheit (29) zur Entstaubung eines Rohgases (18) aus dem Klinkerkühler (4); und
eine Wärmetauschereinheit (30) zur Rückgewinnung von Wärmeenergie (E) aus einem aus der Filtereinheit (29) austretenden Reingas (124), wobei die Wärmetauschereinheit (30) der Filtereinheit (29) strömungstechnisch nachgeschaltet ist,
**gekennzeichnet durch**
eine Reingasrückführung (32) zur zumindest teilweisen Rückführung des Reingases (124) und Vermischung des rückgeführten Reingases (24) mit dem Rohgas (18) zu einem Gasgemisch (25) vor der Filtereinheit (29), wobei die Reingasrückführung (32) zumindest ein Strömungsregulierungselement (27a), insbesondere ein Ventil und/oder ein Gebläse (33), zum Einstellen einer Menge an rückgeführtem Reingas (24) aufweist; und
eine Steuer- und/oder Regelungseinrichtung (26), die dazu eingerichtet ist, eine Temperatur (T₂₅) des das Rohgas (18) und das rückgeführte Reingas (24) aufweisenden Gasgemisches (25), welches in die Filtereinheit (29) zur Entstaubung geleitet wird, durch Einstellen des zumindest einen Strömungsregulierungselements (27a) gemäß einer Temperatursollvorgabe (Tₛₒₗₗ) zu steuern und/oder zu regeln.

2. Zementklinkerherstellungsanlage (1) nach Anspruch 1, **dadurch gekennzeichnet, dass** die Steuer- und/oder Regelungseinrichtung (26) eine Messeinheit (21) aufweist, welche dazu eingerichtet ist, einen Volumenstrom (F) des Rohgases (18) aus dem Klinkerkühler (4) und/oder eine Temperatur (T₁₈) des Rohgases (18) aus dem Klinkerkühler (4) zu bestimmen.

3. Zementklinkerherstellungsanlage (1) nach Anspruch 1 oder 2, **dadurch gekennzeichnet, dass** strömungstechnisch vor der Filtereinheit (29) eine Frischluftzufuhr (34) zum Zuführen von Luft (L), insbesondere Umgebungsluft, vorgesehen ist.

4. Zementklinkerherstellungsanlage (1) nach einem der Ansprüche 1 bis 3, **dadurch gekennzeichnet, dass** strömungstechnisch vor der Filtereinheit (29) eine Mischkammer (23) vorgesehen ist, welche dazu ausgebildet ist, das Rohgas (18) aus dem Klinkerkühler (4) und das rückgeführte Reingas (24) zu dem Gasgemisch (25) vermischen.

5. Zementklinkerherstellungsanlage (1) nach einem der Ansprüche 1 bis 4, **dadurch gekennzeichnet, dass** strömungstechnisch vor der Filtereinheit (29) eine weitere Wärmetauschereinheit (36), insbesondere eine luftgekühlte Wärmetauschereinheit, vorgesehen ist.

6. Zementklinkerherstellungsanlage (1) nach Anspruch 4 und 5, **dadurch gekennzeichnet, dass** die weitere Wärmetauschereinheit (36) parallel zu einer Bypassverbindungsleitung (28) zwischen der Mischkammer (23) und der Filtereinheit (29) angeordnet ist.

7. Zementklinkerherstellungsanlage (1) nach Anspruch 6, **dadurch gekennzeichnet, dass** eine Umschaltvorrichtung (37) vorgesehen ist, welche dazu eingerichtet ist, das Gasgemisch (25) in einer ersten Stellung über die Bypassverbindungsleitung (28) und in einer zweiten Stellung über die weitere Wärmetauschereinheit (36) zu leiten.

8. Zementklinkerherstellungsanlage (1) nach einem der Ansprüche 1 bis 7, **dadurch gekennzeichnet, dass** die Filtereinheit (29) zumindest einen Schlauchfilter (29a) aufweist.

9. Zementklinkerherstellungsanlage (1) nach einem der Ansprüche 1 bis 8, **dadurch gekennzeichnet, dass** die Temperatursollvorgabe (Tₛₒₗₗ) ein Temperatursollwert ist, welcher vorzugsweise geringer als 260 °C ist, insbesondere im Bereich zwischen 180 °C und 250 °C liegt.

10. Zementklinkerherstellungsanlage (1) nach einem der Ansprüche 1 bis 9, **dadurch gekennzeichnet, dass** die Wärmetauschereinheit (30) an ein Fernwärmenetz (31) gekoppelt ist.

11. Zementklinkerherstellungsanlage (1) nach einem der Ansprüche 1 bis 10, **dadurch gekennzeichnet, dass** die Reingasrückführung (32) ein Gebläse (33) aufweist.

12. Verfahren zum Betreiben einer Zementklinkerherstellungsanlage (1) mit den folgenden Schritten:
Erzeugen von Zementklinker (17) in einer Ofenanlage (2), insbesondere einem Drehrohrofen (3);
Kühlen des Zementklinkers (17) in einem an die Ofenanlage (2) anschließenden Klinkerkühler (4), wobei Rohgas (18) aus dem Klinkerkühler (4) austritt;
Steuern und/oder Regeln einer Temperatur (T₂₅) eines aus dem Rohgas (18) und einem rückgeführten Reingas (24) bestehenden Gasgemisches (25) gemäß einer Temperatursollvorgabe (Tₛₒₗₗ) mittels zumindest eines Strömungsregulierungselements (27a), insbesondere eines Ventils und/ein Gebläse, zum Einstellen einer Menge an rückgeführtem Reingas (24);
Entstauben des Gasgemisches (25) in einer Filtereinheit (29), sodass ein Reingas (124) erhalten wird;
Rückgewinnen von Wärmeenergie (E) aus dem Reingas (124) in einer Wärmetauschereinheit (30), welche der Filtereinheit (29) strömungstechnisch nachgeschaltet ist; und
Zumindest teilweises Rückführen des Reingases (124) und Vermischen des rückgeführten Reingases (24) mit dem Rohgas (18) vor der Filtereinheit (29) zu dem Gasgemisch (25).
